# EUROPEAN PATENT SPECIFICATION

(11) **EP 3 352 027 B1**
(45) Date of publication and mention of the grant of the patent: **09.06.2021**
(21) Application number: 17382026.7
(22) Date of filing: 20.01.2017
(51) Int. Cl.: G05B 15/02

(54) **METHOD AND SYSTEM OF SMART CLIMATIZATION MANAGEMENT**
VERFAHREN UND SYSTEM FÜR INTELLIGENTES KLIMATISIERUNGSMANAGEMENT
PROCÉDÉ ET SYSTÈME DE GESTION DE CLIMATISATION INTELLIGENTE

(43) Date of publication of application: 25.07.2018
(73) Proprietor: Fundación Tecnalia Research & Innovation, 48160 Derio - Bizkaia (ES)
(72) Inventor: MANJARRES MARTINEZ, Diana, 48160 Derio - Bizkaia (ES); MERA VAZQUEZ, Ana, 48160 Derio - Bizkaia (ES); LEJARAZU MARQUINA, Adelaida, 48160 Derio - Bizkaia (ES); TELLADO LARAUDOGOITIA, Borja, 48160 Derio - Bizkaia (ES); PEREA OLABARRIA, Eugenio, 48160 Derio - Bizkaia (ES); GIL LÓPEZ, Sergio, 48160 Derio - Bizkaia (ES)
(74) Representative: Balder IP Law, S.L.

(56) References cited:
- WO-A1-2011/072332
- US-A1- 2015 178 865
- US-A1- 2016 334 122

## Description

### FIELD OF THE INVENTION

The present invention has its application within the climate control sector, especially, in the industrial area engaged in automatizing climate control in smart buildings.

### BACKGROUND OF THE INVENTION

Given the recent advances in domotic technologies, there has been a rising interest in automatizing and optimizing climatization systems in residential and commercial buildings. The main goal of these techniques is to optimize energy consumption (and/or the economic cost associated to said energy consumption), while preserving a set of boundary conditions that guarantee the comfort of the users during building occupancy.

For example, US 2007/0299562 A1 discloses a system that adaptively controls and schedules load in an electrical power system to avoid overload situations. In particular, the system continuously monitors the temperature of a building, in order to determine the moments in which instant power demands from air conditioning systems is expected to be high. During those periods of time, other remotely-controlled high-load devices such as electric ovens, pool pumps, electric water heaters, etc., are turned off and scheduled for times with less overall power demand.

In another example, US 6,922,558 B2 provides a framework for an automated climatization management system by bringing wireless connectivity to diverse elements and devices within a building, such as air conditioning machines, lighting elements, temperature and humidity sensors, metering devices, etc. All the retrieved information can be sent to a remote server for automated or manual analysis by the service provider. Said remote server can also generate control commands which are transmitted over the wireless network to the actuators in the air conditioning machines, etc.

However, despite the advances known in the state of the art, climatization optimization is still challenging due to changing weather conditions and user requirements. In order to overcome the limitation of classical logic, based on rules and thresholds, several approaches based on fuzzy or adaptive logic have been proposed. By using trainable models based on neural networks, genetic algorithm, etc., the management systems can learn from historic data and optimize climatization condition for a set of current or expected boundary conditions, such as weather, occupancy, etc.

US2015/178865A1 discloses techniques for managing one or more buildings, including collecting historical building data, rel-time building data, historical exogenous data, and real-time exogenous data and receiving the collected data at an adaptive stochastic controller. The controller can generate predicted conditions with a predictive model.

For example, in "Development of a Neural Network-based Building Model and Application to Geothermal Heat Pumps Predictive Control" (Tristan Salque, Peter Riederer, Dominique Marchio, SIMUL 2012, pp. 24-29) introduces weather forecasts in the optimization problem in order to predict future room temperature, and determine more efficient parameters for a geothermal heat pump. Again, artificial neural networks are used in the implementation of the predictive modules. In this case, although expected changes in environmental conditions are addressed, the method is still limited by the use of raw data in the artificial neural network training, being unable to distinguish between operation modes, occupancy conditions, etc. In addition in this reference a hybrid system with geothermal Heat Pump is presented.

In "Support Vector Regression and Genetic Algorithm for HVAC Optimal Operation" (Ching-Wei Chen and Yung-Chung Chang, Hindawi Publishing Corporation, Mathematical Problems in Engineering, Volume 2016, Article ID 621295) presents a genetic algorithm for optimizing heating, ventilation and air conditioning (HVAC, also called 'climatization' in the present document for simplicity) systems. In particular, the proposed technique minimizes the total power consumption by computing an optimal combination of outlet temperature of chilled water, air handling unit air flow, and secondary chilled water flow. However, the optimization provided by this technique uses a more exhaustive set of measurements. Besides, only the HVAC's primary water flow circuit operation problem is tackled, not taking into account the secondary air loop problem.

In a third example, "Smart HVAC Control in loT: Energy Consumption Minimization with User Comfort Constraints" (Jordi Serra, David Pubill, Angelos Antonopoulos, and Christos Verikoukis, The Scientific World Journal, Volume 2014, Article ID 161874,) introduces comfort retrains in the HVAC air loop optimization problem. Furthermore, gathering of temperature information is automatized at gateway through wireless sensors. This gateway also comprises an energy scheduler, direct connection to the HVAC actuators and remote connection to a control device. The main structure for user-comfort-defined smart climatization managements is hence provided, but the system presents limitations in terms of predictive and optimization power.

In a forth example, "Predictive control of multizone heating, ventilation and air-conditioning systems in non-residential buildings" (Antoine Gamier, Julien Eynard, Matthieu Caussanel, Stephane Grieu, Applied Soft Computing, Elsevier, 2015, 37, pp.847-862), takes into account heat transfer between building areas when computing optimal behaviour of the HVAC system. These relations, along with exogenous disturbances, are included in a neural-network-based predictive control which optimizes power consumption while guaranteeing user comfort. However, in this disclosure a grey-box model is proposed, in which data based models are mixed with physical based models, operational models are not distinguish, temperature set-points are not provided and automatization is not implemented.

Finally, research conducted by researchers in CSIRO, "Dynamic zone modelling for HVAC system control", (Jiaming Li, Geoff Poulton, Glenn Platt, Geoff James, International Journal of Modelling Identification and Control 9(1/2):5 - 14 · April 2010), discloses the development and validation of a dynamic zone model used for improved control of a heating, ventilation and air conditioning (HVAC) system to reduce energy consumption and improve the quality of the indoor environment. An air-conditioning zone model is deduced from an energy and mass balance and then expressed in terms of electric circuit theory, where the electric circuit is used to represent functions of the building elements. Experimental results for real-time zone model fitting and prediction are given. This method is good, plug train and play, but not cost effective since it needs data from several sensors in order to be implementable, e.g.: the supply air temperature in intermediate air handling units or fan-coils.

Therefore, there is still the need in the state of the art for a smart HVAC management technique that provides efficient and robust energy consumption optimization while preserving user comfort boundaries for changing weather (temperature, humidity, solar irradiance, etc.) and varying occupancy conditions (for example, changes in office times along the year).

### SUMMARY OF THE INVENTION

The present invention is set forth and characterized in the independent claims, while the dependent claims describe other characteristics of the invention or variants to the main inventive idea.

The current invention solves the aforementioned problems by disclosing a smart climatization/HVAC management technique which optimizes energy consumption by automatically retrieving historic data and weather forecast data, segmenting said historic data according to semantic states independent of time-of-day, and processing the segmented data in two consecutive self-trained modules: a first module for on and off periods of a HVAC (heating, ventilation and air conditioning) system, and a second module for temperature set points. The first module may additionally take into account on and off periods of mechanical ventilation of forced air (non-treated air) in buildings provided with mechanical ventilation. This way, optimization algorithms can reach better solutions in a more efficient and robust manner, because all actuation modes of the HVAC system are optimized jointly for a given temporal horizon (i.e. the next 24 hours) interchanging the actuation modes and modelling their energy consumptions, readily adapting to changes in weather, occupancy, etc. This means that the proposed methodology not only models the HVAC system but also the building in which it is implemented and the interaction between both system and environment.

In a first aspect of the present invention, a method for managing smart climatization in a building is provided. The method computes on and off periods of the HVAC system and time-resolved temperature set points, which optimize energy consumption, considering a given temporal resolution Δt, a time horizon tₘₐₓ and a given starting interior temperature. That is, the method provides a temperature set point array for a plurality of time slots up to the time horizon, being each time slot separated from the next by the temporal resolution. In a non-limiting example, the temporal resolution is 1 h, meaning that the method provides an optimized energy consumption in intervals of 1 h. In a non-limiting example, the temporal horizon is 24 h, meaning that the method provides an optimized energy consumption for the next 24 hours.

Notice that the on and off periods of the HVAC system computed by the method comprise global on and off periods (i.e. on and off periods of the whole HVAC system), but may additionally comprise on and off periods of particular or optional elements or sub-systems within said HVAC system (e.g. on and off periods of a mechanical ventilation of the HVAC system). That is, the method determines the periods of time in which the HVAC is active but, preferably, it also determines in which portions of said periods of time the mechanical ventilation (or other controllable sub-systems) are also active.

In order to perform this optimization, the method uses the following inputs:
- Weather forecast data, automatically retrieved from a first auxiliary source, such as a weather forecast online provider. Preferably, weather data comprises temperature, relative humidity and solar irradiance forecasts.
- Historic data regarding the exterior weather and interior temperature (that is, the temperature inside the building), automatically retrieved from a second auxiliary source such as a database or a monitorization and control unit of the climatization system of the building. As in the forecast data, historic data preferably comprises temperature, relative humidity and solar irradiance information.
- A starting interior temperature, that is, the actual temperature inside the building when the method is executed.
- Comfort temperature boundaries which determine the minimum and maximum temperatures that can be used as temperature set points while being considered comfortable for the users of the building.
- Preferably, an occupancy timetable, which determines in which time slots the building is occupies, and therefore the comfort temperature boundaries must be met.
- Preferably, historic data regarding energy consumption (electric, gas, etc). More preferably, the energy consumption of the climatization system is isolated from the global energy consumption of the building. Additional input may also be integrated in the optimization problem in particular embodiments of the invention, such as pricing information associated to the energy consumption, retrieved from a smart meter.

Unlike other approaches, the method comprises segmenting the historic data (interior and exterior temperature, relative humidity, irradiance, etc...) according to semantic states which are time-of-day independent. That is, when predictive models are trained within the method, it is not taken into account the time of day where temperature variations occur. The method does, however, classify said variations into semantic states, that is, time segments corresponding to different conditions, dynamics, states or purposes of to the building operation. For example, different semantic states can be segmented based on system and environment interactions, depending if the building is occupied or not at that time, if the building is being acclimatized for posterior occupation, if the building is being occupied for several purposes with differentiated climatization requirements, etc. This way, training data is dissociated from time-of-day and associated to functionality and interoperability, hence enabling the method to adapt to changing schedules and needs, and providing a more optimized operation.

For example, in a first preferred option, four semantic states are considered for data segmentation (nevertheless, notice that other combinations of semantic states can be used in alternative embodiments of the present invention):
- A first off state, that is a state where the climatization is turned off, prior to building occupation.
- A first on state, also prior to building occupation, but wherein the climatization is turned on in order to achieve a temperature slope that acclimatizes the building by the time it is occupied.
- A second on state, during standard occupation.
- A second off state, after said occupation.

Preferably, data is also segmented according to the operation mode of the climatization with no machine information; the algorithms infer operational mode only based on historic data.

That is, historic data is classified into semantic states that consider whether climatization was being used for heating, for cooling, or both.

Next, the segmented historic data is applied to train a first regression model (or a first set of regression models) for on and off periods of the HVAC system (optionally including on and off periods of any related sub-system, such as mechanical ventilation on and off periods), and a meta-heuristic algorithm that uses a second regression model (or a second set of regression models) for temperature set points. Preferably, regression model training is performed using a technique selected from Random Forest, Super Vector Machine and Extreme Learning Machine while meta-heuristic optimization procedure is preferably performed using Harmony Search iterative process. Nevertheless, particular embodiments of the invention may use other machine learning methodologies, like neural network techniques, or heuristic procedure based on evolutionary computation like genetic algorithms known in the state of the art. Also, particular embodiments of the invention may use different algorithms to train the first regression model (or first set of regression models) and the second regression model (or second set of regression models).

Then, the first regression model (or first set of regression models) is applied to compute the optimal on and off periods of the HVAC system (optionally including computing on and off periods of any related sub-system, such as mechanical ventilation on and off periods) for the given weather forecast data, and the given comfort temperature boundaries, occupancy timetable and starting interior temperature. That is, the historic data is used as training an optimization problem that is then applied to the current and future conditions. Preferably, HVAC turn on and turn off times (including mechanical ventilation on and off times when present) are computed according to a meta-heuristic algorithm, by simulating the evolution of interior temperature considering a first instant, typically corresponding to the beginning of building occupation. User comfort is established as indoor temperature constraints in a given timetable. If with that turn on time the comfort boundaries are not met, an iterative process begins, such as an exhaustive search procedure (i.e. all possible combinations are evaluated), which simulates the corresponded interior temperature variation with earlier starting instant. Each instant tried by the iterative process is separated from the prior simulated instant by a difference corresponding to the temporal resolution. In this way, global on and off scheduled times and mechanical ventilation scheduled times are combined and computed jointly, based on indoor temperature simulations, hence minimizing energy cost while guaranteeing user comfort constraints.

Finally, the output of the first regression model (or first set of regression models), that is, the on and off periods of the HVAC system (i.e. global on and off periods and optionally mechanical ventilation on and off periods), are used as input of the second regression models, preferably mixed with a meta-heuristic optimization scheme, which computes the temperature set points based on energy consumption simulators for said on and off and mechanical ventilation periods and given the weather forecast data and any additional input information. Temperature set points may be time-varying, with a resolution corresponding to the aforementioned temporal resolution. The preferred meta-heuristic procedure determines the temperature set-points values as a combinatorial optimization problem between the on and off and mechanical ventilation timetable previously established with a first set of regressors. In other words, the computation of mechanical ventilation period preferably comprises simulating interior temperature with a first mechanical ventilation starting time, and if interior temperature does not reach a minimum comfort temperature boundary during building occupation, iteratively simulating interior temperature with a second starting time, wherein the second starting time is prior to the first starting time by a difference equal to the temporal resolution (Δt), and so on until t = 0 or the minimum comfort temperature boundary is satisfied. This determination may be performed by means of simulating energy consumption for a given set of temperature set points which are iteratively modified following an evolutionary procedure. A second set of regressors is used as fitness function of the meta-heuristic procedure, simulating energy consumption for a given set of temperature set points. Computed on and off times and temperature set points are then automatically transmitted to the monitorization and control unit of the climatization system for their application. Notice that particular embodiments of the method may comprise repeating the disclosed steps for different climatization systems within the same building, or for areas of the same building where the operation parameters of the climatization system can be configured independently. That is, the method may further comprise computing independent HVAC on and off periods for a plurality of climatization systems within the same building (including, when required, computing independent mechanical ventilation on and off periods), and computing independent temperature set points for each climatization system.

Summing up, when the HVAC system does not comprise mechanical ventilation (or when its control is not included in the method), the method comprises:
- Retrieving weather forecast data, weather historic data and interior temperature historic data.
- Segmenting the historic data into time-of-day-independent semantic states.
- Training a first set of regression models and a second set of regression models with the segmented historic data.

- Computing on and off periods of the HVAC (i.e. global turning on and off times of heating, ventilation and/or air conditioning) with the first set of regression models, as well as weather forecast data and interior temperature simulations according to the semantic states.
- Computing a temperature set point array with the second set of regression models according to a meta-heuristic algorithm based on simulations of energy consumption for different temperature set points.

When the HVAC further comprises mechanical ventilation, the method may additionally comprise:
- Computing ON/OFF periods of the mechanical ventilation according to the first regression model or set of regression models, the weather forecast data based on interior temperature simulations depending on the time-of-day-independent semantic states.
- Computing the temperature set point array according to the meta-heuristic algorithm and the second set of regression models, based on simulations of energy consumption for different temperature set point values and on the computed ON/OFF periods of the HVAC system and on the computed ON/OFF periods of the mechanical ventilation.

In a second aspect of the present invention, a system for managing smart climatization in a building is provided. The system comprises logical means which optimize energy consumption by computing on and off HVAC periods (i.e. global on and off periods and optionally mechanical ventilation on and off periods) and temperature set points with given temporal resolution, temporal horizon and boundary conditions. In order to fully automatize the computation, the system comprises connection means that enable to retrieve input data from sensors, databases and auxiliary systems, and to transmit output commands to climatization actuator. In particular, the system comprises:
- First connection means configured to communicate with a monitorization and control unit of the climatization system, enabling to retrieve historic data regarding weather and interior temperature, as well as to send output commands to said monitorization and control unit.
- Second connection means configured to communicate with a weather forecast unit in order to retrieve weather forecast data, such as exterior temperature, relative humidity and solar irradiance.
- Preferably, third connection means configured to communicate with a smart meter in order to retrieve pricing information, indicating the cost of the energy consumption.
- Also preferably, fourth connection means configured to communicate with auxiliary internal and/or external sensors.

Notice that all the connection means can be wired, wireless, or a combination of both. Moreover, multiple connection means may share the same physical connections. Also notice that any connection means may be routed through the monitorization and control unit of the climatization system of the building. That is, data can either be directly retrieved from the sensors, metering devices, weather forecast unit, etc.; or it can be firstly communicated to the monitorization and control unit and stored therein, then retrieved from said monitorization and control unit by the system.

Furthermore, the logical means can either be installed in a device adapted to be installed in the same building as the monitorization and control unit of the climatization system, or they can be installed in a remote server, connected to the building through any suitable communication network known in the state of the art. Regardless of their location, the logical means comprise two modules:
- A first module for on/off periods computation (optionally comprising mechanical ventilation on/off periods and global HVAC on/off periods), configured to train a first set of regression models with historic data segmented in semantic states and to apply said first regression model to the weather forecast data and any other input information according to any preferred option or embodiment of the method of the invention. That is, the first module preferably comprises an on/off training sub-module and an on/off computation sub-module, which are configured to always execute a first part of the described algorithm related to global HVAC on/off periods computation; and to execute a second part of the described algorithm related to mechanical ventilation on/off periods, only when said mechanical ventilation is available.
- A second module for temperature set point computation configured to train a second set of regression models with historic data segmented in semantic states and to apply said second regression model to the on and off periods and any other input information according to any preferred option or embodiment of the method of the invention.

Finally, in a third aspect of the present invention, a computer program is provided which implements the method of the invention, therefore controlling the system of the invention and processing the involved data. The computer program comprises computer program code means adapted to perform any embodiment of the method of the invention when run on a computer, a digital signal processor, a field-programmable gate array, an application-specific integrated circuit, a micro-processor, a micro-controller, or any other form of programmable hardware.

In sum, no prior art disclosure provides an automatized predictive control strategy based on a limited set of measurements (i. e. exogenous variables based on weather forecast and indoor temperature), which controls the ON/OFF, mechanical ventilation, and temperature set points of the HVAC system, in cooling and heating mode indistinctly, which are optimized jointly with the objective of cost optimization while guarantee user comfort.

Notice that any preferred option and particular embodiment of the system of the invention can be applied to the method and computer program of the invention. Likewise, any preferred option and particular implementation of the method and computer program of the invention can be applied to the system of the invention.

With the method, system and computer program of the invention, optimal solutions for varying weather and occupation conditions can be achieved in an efficient and robust manner. Furthermore, complete automatization with auxiliary systems is provided, minimizing the need of active user input. Additional advantages and features of the invention will become apparent from the detailed description that follows and will be particularly pointed out in the appended claims.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:
Figure 1 shows schematically the main processing blocks according to a particular embodiment of the invention, as well as their inputs and outputs.
Figure 2 presents some examples of exterior temperature historic data used to train the regression model, according to a particular embodiment of the invention.
Figure 3 is a flow chart depicting the main steps of the climatization method of the invention, according to a particular embodiment thereof.
Figures 4a and 4b illustrate a particular embodiment of the iterative algorithm for determining mechanical ventilation start-time, in two different occupancy scenarios.
Figure 5 presents an example of an application scenario with remote control, according to a particular embodiment of the invention.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope of the invention. In particular, note that any particular embodiment or feature of the system of the invention may be applied to the method of the invention and vice versa. Also, description of well-known functions and elements are omitted for clarity and conciseness.

Note that in this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

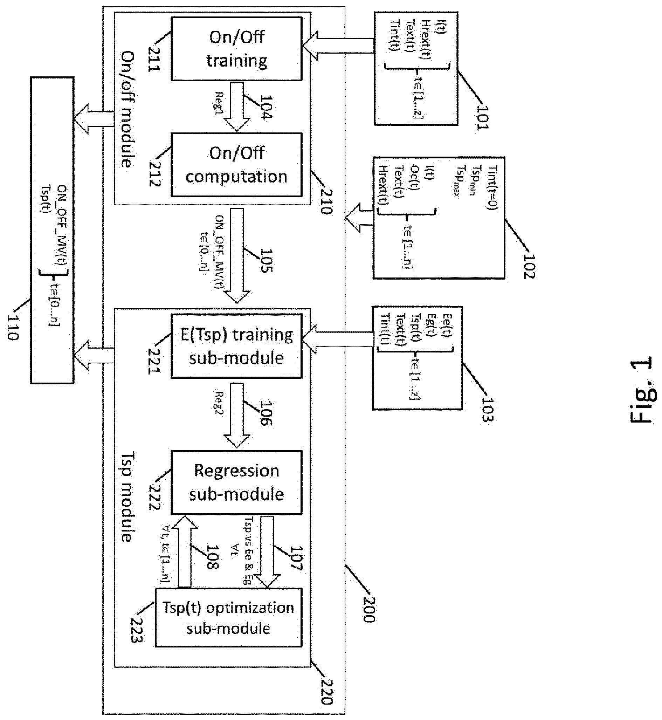

Figure 1 shows schematically the main modules and information involved in a particular embodiment of the method of the invention, also implemented by particular embodiments of the system and the computer program means of the invention. A logical means 200 comprises two main modules, which share a plurality of common inputs 102, as well as having independent inputs, namely a first plurality of independent inputs 101 for a first module 210 and a second plurality of independent inputs 103 for a second module 220:
- The first module 210 computes on/off periods of the HVAC system (or climatization system) and optionally of the mechanical ventilation (when the building in question has mechanical ventilation based on forced air). The first module is hence also referred to in figure 1 as on/off module. The first module 210 further comprises an on/off training sub-module 211 which generates a first regression model (or set of regression models) 104 (Reg1) that is applied at an on/off computation sub-module 212. The computed on/off periods and mechanical ventilation periods (when there is mechanical ventilation) are provided both as a global output 110 (ON_OFF_MV(t)) to be applied to the HVAC system, and as an internal output 105 that is fed to a second module 220.
- The second module 220 computes the optimal array of temperature set points (Tsp(t)). For this reason, in figure 1 this module is referred to as Tsp module. It further comprises: a E(Tsp) training sub-module 221 for learnt energy consumption depending on different temperature set points values; a regression sub-module 222 for simulating energy consumption associated to each array of temperature set points; and a Tsp(t) optimization sub-module 223 for selecting the optimal Tsp(t). The E(Tsp) training sub-module 221 generates a second regression model (or set of regression models) 106 (Reg2) which is fed to the regression sub-module 222. Said regression sub-module 222 provides the Tsp(t) optimization sub-module 223 with Tsp vs electrical and/or gas energy consumption information (Tsp vs Ee and/or Tsp vs Eg, ∀t) 107, and in turn receives from said Tsp optimization sub-module 223 feedback information 108 (∀t, t ∈ [1...n]). Feedback information 108 may particularly refer to the iterative process that occurs as part of a Harmony Search combinatory optimization method. The mathematical problem solved is hence to determine the optimal combination of Tsp(t) between on and off times which optimizes energy consumption. The E(Tsp) training sub-module 221 and the regression sub-module 222 hence simulate the energy consumption associated to each given Tsp(t) array, whereas the Tsp(t) optimization sub-module 223 selects the optimal Tsp(t) array given said modelization, and following a fitness function of an evolutive computation.

A more detailed description of input and output variables is provided as follows. Notice that the optimization problem is solved over time (t) within a temporal horizon (tₘₐₓ) and with a temporal resolution (Δt). For example, tₘₐₓ values may be 6, 12 or 24 hours, whereas Δt values may be 15, 30 or 60 minutes:
- Tint(t=0): starting interior temperature when the optimization process starts (t=0).
- Tspₘᵢₙ and Tspₘₐₓ: configurable temperature set point boundaries, that determine the minimum and maximum temperatures considered to be confortable for the users of the building. These boundaries can be fixed for the whole time horizon or be time-dependent.

- Text(t), t ∈ [1...n]: Exterior temperature forecast with the same temporal resolution (Δt) as the global outputs 110, and within the same time horizon (tₘₐₓ).
- Hrext(t), t ∈ [1...n]: Exterior relative humidty forecast with the same temporal resolution (Δt) as the global outputs 110, and within the same time horizon (tₘₐₓ).
- I(t) , t ∈ [1...n]: Exterior solar irradiance forecast with the same temporal resolution (Δt) as the global outputs 110, and within the same time horizon (tₘₐₓ).
- Oc(t), t ∈ [1...n]: Ocupancy forecast with the same temporal resolution (Δt) as the global outputs 110, and within the same time horizon (tₘₐₓ). Oc(t) can either be a binary vector indicating if the building is occupied or not; or it can be a numeric vector reflecting how many people are expected within the building.
- Ee(t), t ∈ [1...z]: Electrical consumption associated to the HVAC system in order to provide the desired Tsp. Notice that this vector has z elements instead of n, as this vector is built from the training set.
- Eg(t), t ∈ [1...z]: Gas consumption associated to the HVAC system in order to provide the desired Tsp..
- Tsp(t), t ∈ [1...z]: Temperature set point, that is the output interior temperature used to program the monitorization and control unit of the HVAC system. Tsp(t) must always be comprised between Tspₘᵢₙ and Tspₘₐₓ. The HVAC system will consume electricity and/or gas, as reflected in Ee(Tsp(t)) and Eg(Tsp(t)). Since the system is trained with a plurality of Tsp(t) vectors, it is desirable to reflect a wide variety of scenarios in the training set. The vector Tsp(t), t ∈ [1...n] is the main output of the second module 220, indicating the temperature set points for the interior of the building that minimize power consumption while guaranteeing user comfort. Notice the difference between Tsp(t∈ [1...z]), which is used as an input training set; and Tsp(t∈ [1...n]), which is the resulting output.
- Tint(t), t ∈ [1...z]: Occupancy forecast with the same temporal resolution (Δt) as the global outputs 110, and within the same time horizon as the training set.
- ON_OFF_MV(t), t ∈ [1...n]: This vector is the main output of the first module 210, indicating the optimal on/off periods of the HVAC system and the mechanical ventilation in order to guarantee user comfort for a given starting and boundary conditions of the optimization problem. For example, each element of the vector can be marked with '0' if the HVAC is off, with '1' if the HVAC is on, and with '2' if the forced mechanical ventilation is on.

Summing up, the first plurality of independent inputs 101 comprises I(t), Hrext(t), Tex(t) and Tint(t), all with t ∈ [1...z]. The second plurality of independent inputs 103 comprises Ee(t), Eg(t) Tsp(t), Text(t) and Tint(t), all with t ∈ [1...z]. The plurality of common inputs 102 comprises Tint(t=0), Tspₘᵢₙ, Tspₘₐₓ, and I(t), Oc(t), Text(t), Hrext(t), all with t ∈ [1...n]. Finally, the internal output 105 is ON_OFF_MV(t), t ∈ [1...n]; and the global output 110 comprises Tsp(t) and ON_OFF_MV(t), both with t ∈ [1...n].

Considering the aforementioned variables, a detailed description of each sub-module is herein provided. On/off training sub-module 211 implements a machine-learning technique in order to predict future interior temperature behaviour from a training set. In this case, the training set comprises a plurality of vectors retrieved from the monitorization and control unit of the HVAC, reflecting various occupancy and weather scenarios. However, two additional strategies have been applied to the training set in order to provide a more efficient model and more optimized results:
- Time delocalizing: that is, the monitored physical magnitudes of the training set are grouped in terms of their semantic content, instead of their time-of the day. It should be understood by semantic content any condition relevant to the interaction between HVAC operation and environmental conditions, such as on and off periods, different operation regimes, occupancy states, etc. This way, the system will be able to adapt to changes in schedules, weather, occupancy dynamics, etc., without being dragged by time-of-day information.
- Automatic filtering depending on three basic HVAC configurations: cooling, heating and both.

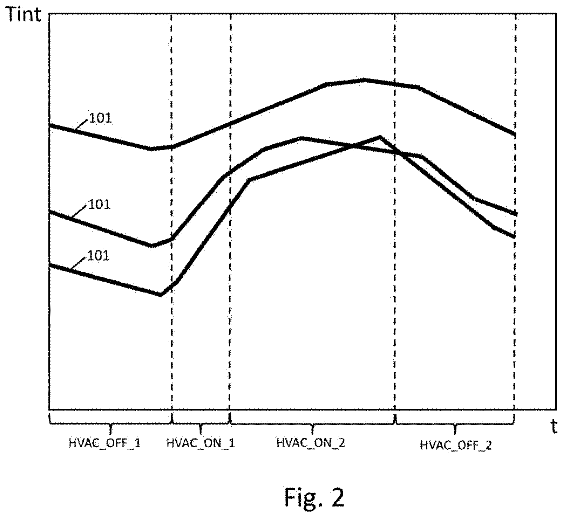

Figure 2 shows a preferred segmentation of the training set in semantic states, with a plurality of sample training vectors from first plurality of independent inputs 101 indicating interior temperature of the building in different times of the year. Notice that the described segmentation can be applied to any input variable and time range, and not only to daily Tint as in the example. Four semantic states are considered in this particular case:
- HVAC_OFF_1: the beginning of the day, with no occupants and the HVAC turned off.
- HVAC_ON_1: HVAC turn on slope before occupancy, in order to achieve comfort boundaries by the time the occupants arrive. Notice that the upward slope reflects the particular case of heating mode during a cold day, but the training set may comprise vectors associated to other operation modes.
- HVAC_ON_2: HVAC turned on during standard building occupancy, once a stable temperature is achieved.
- HVAC_OFF_2: HVAC turned off for the night after the building is empty.
Notice, however, that other semantic states can be used in particular embodiments, such as nocturnal occupancy, nocturnal mechanical ventilation, turn-off slope, etc. For each segmented semantic state, and based on regressive techniques, correspondences between external exogenous conditions and interior magnitudes are computed. These correspondences are reflected in a plurality of regressors of Reg1. The permutation between on/off scheduler and mechanical ventilation used is determined based on an exhaustive search methodology evaluating all possible timetable combinations and choosing the best combination which minimizes energy cost while guarantee user comfort as a constraints in the simulated indoor temperature.

Turning back to figure 1, on/off computation sub-module 212 applies the computed first set of regressors (Reg1) to determine the on/off periods of the HVAC and the forced mechanical ventilation periods within the temporal horizon. The optimal solution is considered to be the one that minimizes the energy cost in the period of time where the climatization is on and maximizes the fraction of that time where the mechanical ventilation is on, while guaranteeing user comfort conditions. The computed on/off periods and, when available mechanical ventilation periods, stored in ON_OFF_MV, are then provided to the second module 220 for Tsp(t) computation.

E(Tsp) training sub-module 221 creates the second regression model or set of regression models (Reg2) based on historic data retrieved from a monitorization and control unit of the building HVAC. In this particular implementation, historic data of electrical consumption Ee and/or gas consumption Eg, interior temperature, temperature set points and exterior weather conditions is applied to the regression model creation.

Regression sub-module 222 then uses the regressors provided by the E(Tsp) training sub-module 221 in order to compute, for the next time interval:
- Interior temperature.
- Energy consumption associated to the HVAC system given the interior temperature set points.
Some regression methods that can be used to implement the regression sub-module 222 are Random Forest, Support Vector Machine and Extreme Learning Machine, and some evolutionary or fuzzy computation to optimize Tsp(t) values is Harmony Search although other particular embodiments may be based on other machine-learning/fuzzy logic algorithms, such as any genetic or neural network algorithm known in the state of the art.

Tsp(t) optimization sub-module 223 solves the combinatory optimization problem which determines which combination of Tsp(t), in a given time interval, minimizes energy consumption, typically applied to those semantic states with stable temperature, such as HVAC_ON_2. That is, for each instant 1...n within the temporal horizon, an optimal Tsp(t) value is computed based on:
- Previous values of Tint(t-1) and Tsp(t-1) and weather forecast.
- Weather forecast for future time intervals.
- Energy consumption associated to each Tsp(t).

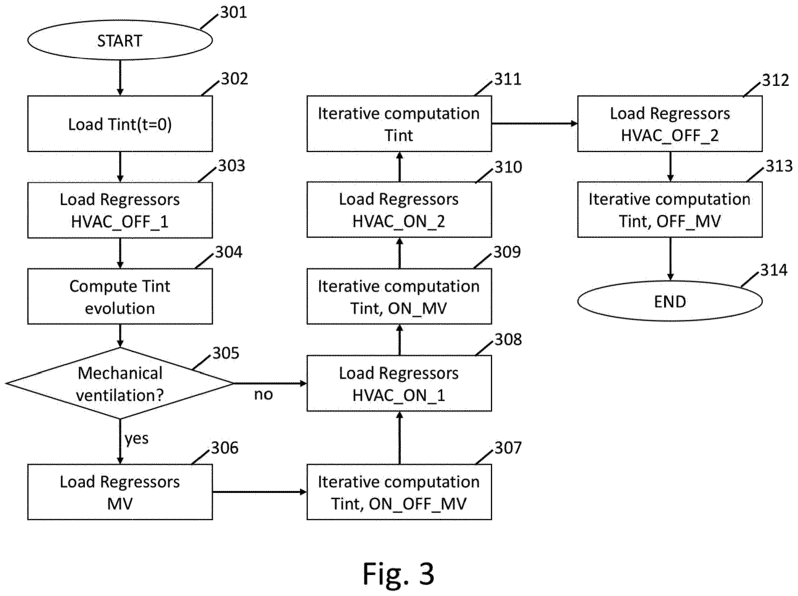

Figure 3 shows with greater detail the steps performed by the aforementioned modules. The process starts 301 by loading the initial interior temperature Tint(t=0) 302 (step 'Load Tint(t=0)' in the figure) and loading a first set of regressors associated to the first semantic state HVAC_OFF_1 303 (step 'Load regressors HVAC_OFF_1' in the figure). Then, a first HVAC turn on time is assumed, prior to the start of the building occupation. Operation mode (cooling, heating or both) is computed as a function of interior temperature Tint (positive slopes means heating mode, negative means cooling mode, plane means both), start of occupation and comfort boundaries. Initial interior temperature Tint(t=0) is introduced in the regression model in order to compute the expected evolution of Tint 304 (step 'compute Tint evolution' in the figure). If a desired temperature set point Tsp range is achieved, iterative computation is cancelled and turning on instant is set. Otherwise, the evolution is computed again considering an earlier turn on time.

If mechanical ventilation is active (that is, if the building has mechanical ventilation) 305 (step 'mechanical ventilation?' in the figure), a specific mechanical ventilation set of regressors MV is retrieved 306 (step 'load regressors MV' in the figure) and applied to the iterative computation of interior temperature Tint and of on/off periods of the HVAC system and of the mechanical ventilation ON_OFF_MV 307 (step 'iterative computation Tint, ON_OFF_MV' in the figure). Otherwise, a set of regressors of HVAC_ON_1 are loaded 308 (step 'load regressors HVAC_ON_1' in the figure), followed by the iterative computation of interior temperature Tint 309 (step 'iterative computation Tint, ON_MV' in the figure) as previously described. The same process is followed for the rest of the semantic states. The set of regressors of HVAC_ON_2 is loaded 310 (step 'load regressors HVAC_ON_2' in the figure), followed by the iterative computation of Tint for this state 311 (step 'iterative computation Tint' in the figure). Then, the set of regressors of HVAC_OFF_2 is loaded 312 (step 'load regressors HVAC_OFF_2' in the figure), followed by the iterative computation of Tint for this final state 313 (step 'iterative computation Tint, OFF_MV' in the figure). The process ends 314 when the temporal horizon is reached. To determine HVAC on and off times (including mechanical ventilation on and off times when present), Tint is simulated based on the semantic states. Since when the HVAC system is off, no energy is consumed, the method tries to maximize the off period while preserving comfort conditions. If comfort conditions are met, mechanical ventilation is not used. Otherwise, Tint is simulated with increasingly larger on periods of mechanical ventilation (e.g. 1h, 2h, 3h...) until the simulated Tint satisfies the comfort conditions. An exhaustive search is hence performed, finally selecting the solution with the lowest energy cost.

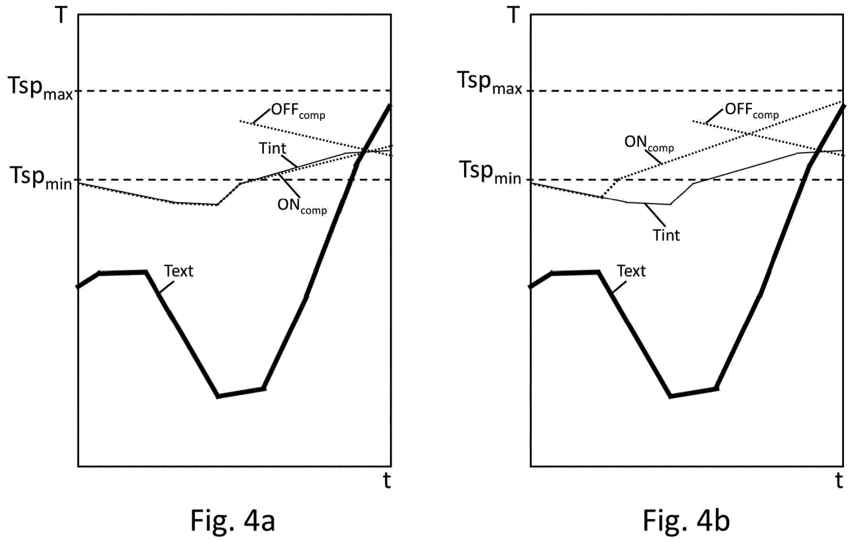

Figures 4a and 4b present two examples of HVAC turning on time computations in order to guarantee comfort boundaries for two different occupation schedules given the same exterior temperature forecast (Text). In the figures, it is also represented the interior temperature (Tint). The first dotted curve ON_{comp} represents the result of the iterative computation process of the turning on time, as previously described, whereas the second dotted curve OFF_{comp} represents the result of the iterative computation process of the turning off time. Notice that the method is capable of readily adapting to different occupation schedules, even if they are different from the schedules of the training set. In both cases, HVAC is determined to be turned on one hour before the first occupants arrive.

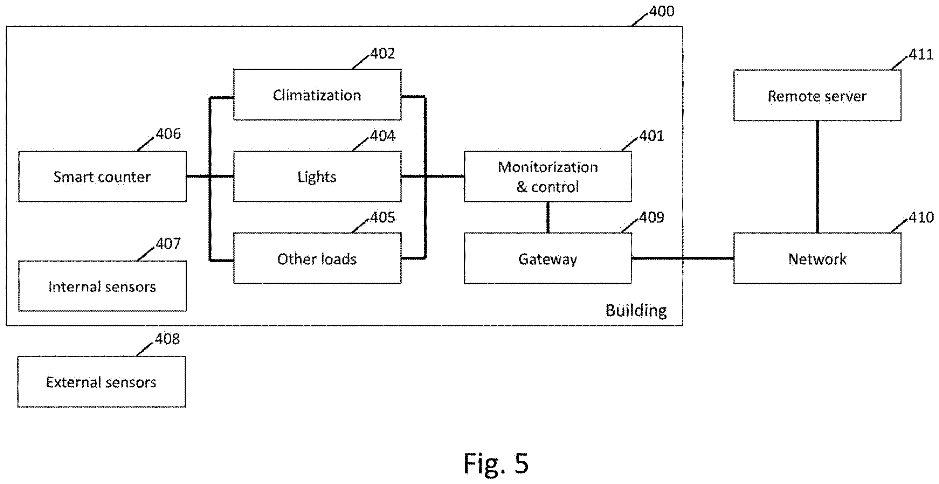

Finally, figure 5 shows an example of an application scenario in which the logical means 200 are implemented in a remote server 411. The remote server 411 is connected to the monitorization and control unit 401 of the building 400 HVAC system through a network 410 and a gateway 409, which can implement any appropriate communication protocol known in the state of the art, such a standard internet connection. Notice, however, that other particular embodiments may implement the logical means 200 locally inside the building 400.

In this particular case, all the data retrieval is centralized through the monitorization and control unit 401, although other embodiments may comprise retrieving information data directly from auxiliary devices. In particular, the monitorization and control unit 401 manages a climatization unit 402, lighting unit 404 as well as any other load 405. The building further comprises a smart counter 406 for energy consumption control, as well as any auxiliary internal sensor 407 and/or external sensor 408.

## Claims

1. A method of smart building climatization management, for optimizing energy consumption (Ee, Eg) given a temporal resolution (Δt), a temporal horizon (tₘₐₓ) and a starting interior temperature, the method comprising:
automatically retrieving weather forecast data, weather historic data and interior temperature (Tint) historic data;
segmenting the historic data according to a plurality of time-of-day-independent semantic states;
training a first set of regression models (Reg1) with the segmented historic data;
computing ON/OFF periods of a HVAC system (ON_OFF_MV) according to at least the first set of regression models (Reg1) and the weather forecast data based on interior temperature simulations depending on the time-of-day-independent semantic states;
the method being **characterized in that** the step of
computing ON/OFF periods of a HVAC system (ON_OFF_MV) further comprises simulating interior temperature (Tint) with a first starting time and, if interior temperature (Tint) does not reach the minimum comfort temperature boundary (Tspₘᵢₙ) during building occupation, iteratively simulating interior temperature (Tint) with a second starting time, wherein the second starting time is prior to the first starting time by a difference equal to the temporal resolution (Δt), and so on until the temporal horizon (tₘₐₓ) is reached or a minimum comfort temperature boundary is satisfied,
the method further comprising:
training a second set of regression models (Reg2) with the segmented historic data;
computing a temperature set point array (Tsp(t)) according to a meta-heuristic algorithm that uses said second set of regression models (Reg2) based on simulations of energy consumption for different temperature set point values E(Tsp(t)) and on the computed ON/OFF periods of the HVAC system (ON_OFF_MV).

2. The method according to claim 1, further comprising:
computing ON/OFF periods of a mechanical ventilation according to at least the first set of regression models (Reg1) and the weather forecast data based on interior temperature simulations depending on the time-of-day-independent semantic states; and
computing a temperature set point array (Tsp(t)) according to a meta-heuristic algorithm that uses said second set of regression models (Reg2) based on simulations of energy consumption for different temperature set point values E(Tsp(t)) and on the computed ON/OFF periods of the HVAC system (ON_OFF_MV) and on the computed ON/OFF periods of the mechanical ventilation.

3. The method according to either claim 1 or 2, wherein said steps of computing ON/OFF periods of a HVAC system (ON_OFF_MV), computing ON/OFF periods of a mechanical ventilation or computing the temperature set point (Tsp(t)), further comprise an optimization process which includes comfort temperature boundaries (Tspₘᵢₙ, Tspₘₐₓ), an occupancy timetable (Oc) and a starting interior temperature (Tint(t=0)).

4. The method according to any of the previous claims, wherein said plurality of time-of-day-independent semantic states comprise at least a first off state (HAVC_OFF_1) prior to building occupation, a first on state (HAVC_ON_1) prior to building occupation, a second on state (HVAC_ON_2) during building occupation, and a second off state (HVAC_OFF_2) after building occupation.

5. The method according to any of the previous claims, wherein said plurality of time-of-day-independent semantic states comprise states with heating operation, states with cooling operation and states with both heating and cooling operation.

6. The method according to any of the previous claims, wherein the retrieved weather forecast data and weather historic data comprises exterior temperature (Text), relative humidity (Hrext) and solar irradiance information (I).

7. The method according to any of the previous claims when dependent on claim 2, wherein the step of computing ON/OFF periods of a mechanical ventilation further comprises simulating interior temperature (Tint) with a first starting time and, if interior temperature (Tint) does not reach the minimum comfort temperature boundary (Tspₘᵢₙ) during building occupation, iteratively simulating interior temperature (Tint) with a second starting time, wherein the second starting time is prior to the first starting time by a difference equal to the temporal resolution (Δt), and so on until the temporal horizon (tₘₐₓ) is reached or a minimum comfort temperature boundary is satisfied.

8. The method according to claim 7, wherein the step of computing mechanical ventilation period further comprises simulating interior temperature (Tint) with a first mechanical ventilation starting time, and if interior temperature does not reach a minimum comfort temperature boundary during building occupation, iteratively simulating interior temperature with a second starting time, wherein the second starting time is prior to the first starting time by a difference equal to the temporal resolution (Δt), and so on until the temporal horizon (tₘₐₓ) is reached or the minimum comfort temperature boundary is satisfied.

9. The method according to any of the previous claims further comprising:
automatically retrieving pricing information associated to the energy consumption (Ee, Eg) from a smart metering device (406); and
applying the retrieved pricing information to the step of computing the temperature set point (Tsp(t)).

10. A system of smart building climatization management, configured to optimize energy consumption (Ee, Eg) given a temporal resolution (Δt) and a temporal horizon (tmax), the system comprising:
first connection means adapted to retrieve weather and interior temperature (Tint) historic data from a monitorization and control unit (401) and send ON/OFF periods of a HVAC system (ON_OFF_MV) and a temperature set point (Tsp) to said monitorization and control unit (401);
second connection means adapted to retrieve weather forecast data from a weather forecast unit;
logical means (200) configured to segment the historic data according to a plurality of time-of-day-independent semantic states, wherein the logical means (200) further comprise:
a first module (210) configured to train a first set of regression models (Reg1) with the segmented historic data; and to compute the ON/OFF periods of a HVAC system (ON_OFF_MV) according to at least the first set of regression models (Reg1) and the weather forecast data;
the system being **characterized in that**
computing the ON/OFF periods of the HVAC system (ON_OFF_MV) comprises simulating interior temperature (Tint) with a first starting time and, if interior temperature (Tint) does not reach the minimum comfort temperature boundary (Tspₘᵢₙ) during building occupation, iteratively simulating interior temperature (Tint) with a second starting time, wherein the second starting time is prior to the first starting time by a difference equal to the temporal resolution (Δt), and so on until the temporal horizon (tₘₐₓ) is reached or a minimum comfort temperature boundary is satisfied,
the system further comprising:
a second module (220) configured to train a second set of regression models (Reg2) with the segmented historic data; and to compute a temperature set point array (Tsp(t)) according to a meta-heuristic algorithm that uses said second set of regression models (Reg2) based on simulations of energy consumption for different temperature set point values E(Tsp(t)) and on the computed ON/OFF periods of the HVAC system (ON_OFF_MV).

11. The system according to claim 10, wherein said logical means (200) are located in the same building as the monitorization and control unit (401).

12. The system according to claim 10, wherein said logical means (200) are located in a remote server (411) connected to the building through a communication network (410).

13. The system according to any of claims 10 to 12, further comprising third connection means adapted to retrieve pricing information associated to the energy consumption (Ee, Eg) from a smart metering device (406).

14. The system according to any of claims 10 to 13, further comprising fourth connection means adapted to retrieve information from internal sensors (407) and external sensors (408) of the building.

15. A computer program comprising computer program code means adapted to perform the steps of the method according to any claims from 1 to 9 when said program is run on a computer, a digital signal processor, a field-programmable gate array, an application-specific integrated circuit, a micro-processor, a micro-controller, or any other form of programmable hardware.

## Patentansprüche

1. Verfahren für intelligentes Gebäudeklimatisierungsmanagement zum Optimieren eines Energieverbrauchs (Ee, Eg), wobei eine zeitliche Auflösung (Δt), ein zeitlicher Horizont (tₘₐₓ) und eine Start-Innentemperatur gegeben sind, wobei das Verfahren umfasst:
automatisches Abrufen von Wetterprognosedaten, historischen Wetterdaten und historischen Innentemperatur (Tint)-Daten;
Segmentieren der historischen Daten gemäß einer Mehrzahl von tageszeitunabhängigen semantischen Zuständen;
Trainieren eines ersten Satzes von Regressionsmodellen (Reg1) mit den segmentierten historischen Daten;
Berechnen von EIN/AUS-Zeiträumen eines HVAC-Systems (EIN_AUS_MV) gemäß zumindest dem ersten Satz von Regressionsmodellen (Reg1) und den Wetterprognosedaten basierend auf Innentemperatur-Simulationen in Abhängigkeit von den tageszeitunabhängigen semantischen Zuständen; und
wobei das Verfahren **dadurch gekennzeichnet ist, dass** der Schritt des
Berechnens von EIN/AUS-Zeiträumen eines HVAC-Systems (EIN_AUS_MV) ferner ein Simulieren einer Innentemperatur (Tint) mit einer ersten Startzeit und, falls eine Innentemperatur (Tint) die minimale Komforttemperaturgrenze (Tspₘᵢₙ) während einer Gebäudebelegung nicht erreicht, ein iteratives Simulieren einer Innentemperatur (Tint) mit einer zweiten Startzeit umfasst, wobei die zweite Startzeit um eine Differenz gleich der zeitlichen Auflösung (Δt) vor der ersten Startzeit ist, und so weiter, bis der zeitliche Horizont (tₘₐₓ) erreicht ist oder eine minimale Komforttemperaturgrenze erfüllt ist,
wobei das Verfahren ferner umfasst:
Trainieren eines zweiten Satzes von Regressionsmodellen (Reg2) mit den segmentierten historischen Daten;
Berechnen eines Temperatur-Sollwert-Arrays (Tsp(t)) gemäß einem meta-heuristischen Algorithmus, welcher den zweiten Satz von Regressionsmodellen (Reg2) basierend auf Simulationen eines Energieverbrauchs für verschiedene Temperatur-Sollwert-Werte E(Tsp(t)) und auf den berechneten EIN/AUS-Zeiträumen des HVAC-Systems (EIN_AUS_MV) verwendet.

2. Verfahren gemäß Anspruch 1, ferner umfassend:
Berechnen von EIN/AUS-Zeiträumen einer mechanischen Ventilation gemäß zumindest dem ersten Satz von Regressionsmodellen (Reg1) und den Wetterprognosedaten basierend auf Innentemperatur-Simulationen in Abhängigkeit von den tageszeitunabhängigen semantischen Zuständen; und
Berechnen eines Temperatur-Sollwert-Arrays (Tsp(t)) gemäß einem meta-heuristischen Algorithmus, welcher den zweiten Satz von Regressionsmodellen (Reg2) basierend auf Simulationen eines Energieverbrauchs für verschiedene Temperatur-Sollwert-Werte E(Tsp(t)) und auf den berechneten EIN/AUS-Zeiträumen des HVAC-Systems (EIN_AUS_MV) und auf den berechneten EIN/AUS-Zeiträumen der mechanischen Ventilation verwendet.

3. Verfahren gemäß Anspruch 1 oder 2, wobei die Schritte eines Berechnens von EIN/AUS-Zeiträumen eines HVAC-Systems (EIN_AUS_MV), eines Berechnens von EIN/AUS-Zeiträumen einer mechanischen Ventilation oder eines Berechnens des Temperatur-Sollwerts (Tsp(t)) ferner einen Optimierungsprozess umfassen, welcher Komforttemperaturgrenzen (Tspₘᵢₙ, Tspₘₐₓ), einen Belegungszeitplan (Oc) und eine Start-Innentemperatur (Tint(t=0)) enthält.

4. Verfahren gemäß einem der vorhergehenden Ansprüche, wobei die Mehrzahl von tageszeitunabhängigen semantischen Zuständen zumindest einen ersten AUS-Zustand (HAVC_AUS_1) vor einer Gebäudebelegung, einen ersten EIN-Zustand (HAVC_EIN_1) vor einer Gebäudebelegung, einen zweiten EIN-Zustand (HVAC_EIN_2) während einer Gebäudebelegung und einen zweiten AUS-Zustand (HVAC_AUS_2) nach einer Gebäudebelegung umfasst.

5. Verfahren gemäß einem der vorhergehenden Ansprüche, wobei die Mehrzahl von tageszeitunabhängigen semantischen Zuständen, Zustände mit Heizbetrieb, Zustände mit Kühlbetrieb und Zustände mit sowohl Heiz- als auch Kühlbetrieb umfasst.

6. Verfahren gemäß einem der vorhergehenden Ansprüche, wobei die abgerufenen Wetterprognosedaten und historischen Wetterdaten eine Außentemperatur (Text), eine relative Luftfeuchtigkeit (Hrext) und Sonneneinstrahlungsinformationen (I) umfassen.

7. Verfahren gemäß einem der vorhergehenden Ansprüche, wenn von Anspruch 2 abhängig, wobei der Schritt eines Berechnens von EIN/AUS-Zeiträumen einer mechanischen Ventilation ferner ein Simulieren einer Innentemperatur (Tint) mit einer ersten Startzeit und, falls eine Innentemperatur (Tint) die minimale Komforttemperaturgrenze (Tspₘᵢₙ) während einer Gebäudebelegung nicht erreicht, ein iteratives Simulieren einer Innentemperatur (Tint) mit einer zweiten Startzeit umfasst, wobei die zweite Startzeit um eine Differenz gleich der zeitlichen Auflösung (Δt) vor der ersten Startzeit ist, und so weiter, bis der zeitliche Horizont (tₘₐₓ) erreicht ist oder eine minimale Komforttemperaturgrenze erfüllt ist.

8. Verfahren gemäß Anspruch 7, wobei der Schritt eines Berechnens eines Zeitraums einer mechanischen Ventilation ferner ein Simulieren einer Innentemperatur (Tint) mit einer ersten Startzeit einer mechanischen Ventilation, und, falls eine Innentemperatur eine minimale Komforttemperaturgrenze während einer Gebäudebelegung nicht erreicht, ein iteratives Simulieren einer Innentemperatur mit einer zweiten Startzeit umfasst, wobei die zweite Startzeit um eine Differenz gleich der zeitlichen Auflösung (Δt) vor der ersten Startzeit ist, und so weiter, bis der zeitliche Horizont (tₘₐₓ) erreicht ist oder die minimale Komforttemperaturgrenze erfüllt ist.

9. Verfahren gemäß einem der vorhergehenden Ansprüche, ferner umfassend:
automatisches Abrufen von Preisinformationen, welche dem Energieverbrauch (Ee, Eg) zugeordnet sind, von einer intelligenten Messvorrichtung (406); und
Anwenden der abgerufenen Preisinformationen auf den Schritt eines Berechnens des Temperatur-Sollwerts (Tsp(t)).

10. System für intelligentes Gebäudeklimatisierungsmanagement, welches konfiguriert ist, einen Energieverbrauch (Ee, Eg) zu optimieren, wobei eine zeitliche Auflösung (Δt) und ein zeitlicher Horizont (tmax) gegeben sind, wobei das System umfasst:
erste Verbindungsmittel, welche eingerichtet sind, historische Wetter- und Innentemperatur (Tint)-Daten von einer Überwachungs- und Steuereinheit (401) abzurufen und EIN/AUS-Zeiträume eines HVAC-Systems (EIN_AUS_MV) und einen Temperatur-Sollwert (Tsp) an die Überwachungs- und Steuereinheit (401) zu senden;
zweite Verbindungsmittel, welche eingerichtet sind, Wetterprognosedaten von einer Wetterprognoseeinheit abzurufen;
logische Mittel (200), welche konfiguriert sind, die historischen Daten gemäß einer Mehrzahl von tageszeitunabhängigen semantischen Zuständen zu segmentieren, wobei die logischen Mittel (200) ferner umfassen:
ein erstes Modul (210), welches konfiguriert ist, einen ersten Satz von Regressionsmodellen (Reg1) mit den segmentierten historischen Daten zu trainieren; und die EIN/AUS-Zeiträume eines HVAC-Systems (EIN_AUS_MV) gemäß zumindest dem ersten Satz von Regressionsmodellen (Reg1) und den Wetterprognosedaten zu berechnen;
wobei das System **dadurch gekennzeichnet ist, dass**
ein Berechnen der EIN/AUS-Zeiträume des HVAC-Systems (EIN_AUS_MV) ferner ein Simulieren einer Innentemperatur (Tint) mit einer ersten Startzeit und, falls eine Innentemperatur (Tint) die minimale Komforttemperaturgrenze (Tspₘᵢₙ) während einer Gebäudebelegung nicht erreicht, ein iteratives Simulieren einer Innentemperatur (Tint) mit einer zweiten Startzeit umfasst, wobei die zweite Startzeit um eine Differenz gleich der zeitlichen Auflösung (Δt) vor der ersten Startzeit ist, und so weiter, bis der zeitliche Horizont (tmax) erreicht ist oder eine minimale Komforttemperaturgrenze erfüllt ist,
wobei das System ferner umfasst:
ein zweites Modul (220), welches konfiguriert ist, einen zweiten Satz von Regressionsmodellen (Reg2) mit den segmentierten historischen Daten zu trainieren;
und einen Temperatur-Sollwert (Tsp(t)) gemäß einem meta-heuristischen Algorithmus zu berechnen, welcher den zweiten Satz von Regressionsmodellen (Reg2) basierend auf Simulationen eines Energieverbrauchs für verschiedene Temperatur-Sollwert-Werte E(Tsp(t)) und auf den berechneten EIN/AUS-Zeiträumen des HVAC-Systems (EIN_AUS_MV) verwendet.

11. System gemäß Anspruch 10, wobei die logischen Mittel (200) im selben Gebäude wie die Überwachungs- und Steuereinheit (401) angeordnet sind.

12. System gemäß Anspruch 10, wobei die logischen Mittel (200) in einem Remote-Server (411) angeordnet sind, welcher durch ein Kommunikationsnetzwerk (410) mit dem Gebäude verbunden ist.

13. System gemäß einem der Ansprüche 10 bis 12, ferner umfassend dritte Verbindungsmittel, welche eingerichtet sind, Preisinformationen, welche dem Energieverbrauch (Ee, Eg) zugeordnet sind, von einer intelligenten Messvorrichtung (406) abzurufen.

14. System gemäß einem der Ansprüche 10 bis 13, ferner umfassend vierte Verbindungsmittel, welche eingerichtet sind, Informationen von internen Sensoren (407) und externen Sensoren (408) des Gebäudes abzurufen.

15. Ein Computerprogramm, welches Computerprogrammcodemittel umfasst, welche eingerichtet sind, die Schritte des Verfahrens gemäß einem der Ansprüche 1 bis 9 durchzuführen, wenn das Programm auf einem Computer, einem digitalen Signalprozessor, einem Field Programmable Gate Array, einer anwendungsspezifischen integrierten Schaltung, einem Mikroprozessor, einem Mikrocontroller oder einer anderen Form von programmierbarer Hardware ausgeführt wird.

## Revendications

1. Méthode de gestion intelligente de climatisation de bâtiment, pour optimiser une consommation d'énergie (Ee, Eg) étant donnés une résolution temporelle (Δt), un horizon temporel (tₘₐₓ) et une température intérieure de début, la méthode comprenant :
la récupération, de manière automatique, de données de prévisions météorologiques, de données historiques météorologiques et de données historiques de températures intérieures (Tint) ;
la segmentation des données historiques selon une pluralité d'états sémantiques indépendants de l'heure du jour ;
l'entraînement d'un premier ensemble de modèles de régression (Reg1) avec les données historiques segmentées ;
le calcul de périodes MARCHE/ARRÊT d'un système de chauffage, ventilation et climatisation (HVAC) (ON_OFF_MV) selon au moins le premier ensemble de modèles de régression (Reg1) et les données de prévisions météorologiques sur la base de simulations de températures intérieures en fonction des états sémantiques indépendants de l'heure du jour;
la méthode étant **caractérisée en ce que** l'étape de
calcul de périodes MARCHE/ARRÊT d'un système HVAC (ON_OFF_MV) comprend en outre la simulation d'une température intérieure (Tint) avec une première heure de début et, si la température intérieure (Tint) n'atteint pas la limite de température de confort minimale (Tspₘᵢₙ) pendant une occupation du bâtiment, la simulation, de manière itérative, d'une température intérieure (Tint) avec une seconde heure de début, dans laquelle la seconde heure de début est antérieure à la première heure de début d'une différence égale à la résolution temporelle (Δt), et ainsi de suite jusqu'à ce que l'horizon temporel (tₘₐₓ) soit atteint ou qu'une limite de température de confort minimale soit satisfaite,
la méthode comprenant en outre :
l'entraînement d'un second ensemble de modèles de régression (Reg2) avec les données historiques segmentées ;
le calcul d'une matrice de points de consigne de température (Tsp(t)) selon un algorithme méta-heuristique qui utilise ledit second ensemble de modèles de régression (Reg2) sur la base de simulations de consommation d'énergie pour différentes valeurs de point de consigne de température E(Tsp(t)) et des périodes MARCHE/ARRÊT du système HVAC (ON_OFF_MV) calculées.

2. Méthode selon la revendication 1, comprenant en outre :
le calcul de périodes MARCHE/ARRÊT d'une ventilation mécanique selon au moins le premier ensemble de modèles de régression (Reg1) et les données de prévisions météorologiques sur la base de simulations de température intérieure en fonction des états sémantiques indépendants de l'heure du jour ; et
le calcul d'une matrice de points de consigne de température (Tsp(t)) selon un algorithme méta-heuristique qui utilise ledit second ensemble de modèles de régression (Reg2) sur la base de simulations de consommation d'énergie pour différentes valeurs de point de consigne de température E(Tsp(t)) et des périodes MARCHE/ARRÊT du système HVAC (ON_OFF_MV) calculées et des périodes MARCHE/ARRÊT de la ventilation mécanique calculées.

3. Méthode selon la revendication 1 ou 2, dans laquelle lesdites étapes de calcul de périodes MARCHE/ARRÊT d'un système HVAC (ON_OFF_MV), de calcul de périodes MARCHE/ARRÊT d'une ventilation mécanique ou de calcul du point de consigne de température (Tsp(t)), comprennent en outre un processus d'optimisation qui inclut des limites de température de confort (Tspₘᵢₙ, Tspₘₐₓ), un calendrier d'occupation (Oc) et une température intérieure de début (Tint(t=0)).

4. Méthode selon l'une quelconque des revendications précédentes, dans laquelle ladite pluralité d'états sémantiques indépendants de l'heure du jour comprennent au moins un premier état d'arrêt (HAVC_OFF_1) antérieur à une occupation du bâtiment, un premier état de marche (HAVC_ON_1) antérieur à une occupation du bâtiment, un second état de marche (HVAC_ON_2) pendant une occupation du bâtiment, et un second état d'arrêt (HVAC_OFF_2) postérieur à une occupation du bâtiment.

5. Méthode selon l'une quelconque des revendications précédentes, dans laquelle ladite pluralité d'états sémantiques indépendants de l'heure du jour comprennent des états avec opération de chauffage, des états avec opération de refroidissement et des états avec à la fois des opérations de chauffage et de refroidissement.

6. Méthode selon l'une quelconque des revendications précédentes, dans laquelle les données de prévisions météorologiques et les données historiques météorologiques récupérées comprennent une température extérieure (Text), une humidité relative (Hrext) et des informations de rayonnement solaire (I).

7. Méthode selon l'une quelconque des revendications précédentes lorsque dépendantes de la revendication 2, dans laquelle l'étape de calcul de périodes MARCHE/ARRÊT d'une ventilation mécanique comprend en outre la simulation d'une température intérieure (Tint) avec une première heure de début et, si la température intérieure (Tint) n'atteint pas la limite de température de confort minimale (Tspₘᵢₙ) pendant une occupation du bâtiment, la simulation, de manière itérative, d'une température intérieure (Tint) avec une seconde heure de début, dans laquelle la seconde heure de début est antérieure à la première heure de début d'une différence égale à la résolution temporelle (Δt), et ainsi de suite jusqu'à ce que l'horizon temporel (tₘₐₓ) soit atteint ou qu'une limite de température de confort minimale soit satisfaite.

8. Méthode selon la revendication 7, dans laquelle l'étape de calcul d'une période de ventilation mécanique comprend en outre la simulation d'une température intérieure (Tint) avec une première heure de début de ventilation mécanique, et si la température intérieure n'atteint pas une limite de température de confort minimale pendant une occupation du bâtiment, la simulation, de manière itérative, d'une température intérieure avec une seconde heure de début, dans laquelle la seconde heure de début est antérieure à la première heure de début d'une différence égale à la résolution temporelle (Δt), et ainsi de suite jusqu'à ce que l'horizon temporel (tₘₐₓ) soit atteint ou que la limite de température de confort minimale soit satisfaite.

9. Méthode selon l'une quelconque des revendications précédentes comprenant en outre :
la récupération, de manière automatique, d'informations de tarification associées à la consommation d'énergie (Ee, Eg) à partir d'un dispositif de comptage intelligent (406) ; et
l'application des informations de tarification récupérées à l'étape de calcul du point de consigne de température (Tsp(t)).

10. Système de gestion intelligente de climatisation de bâtiment, configuré pour optimiser une consommation d'énergie (Ee, Eg) étant donnés une résolution temporelle (Δt) et un horizon temporel (tₘₐₓ), le système comprenant :
des premiers moyens de connexion conçus pour récupérer des données historiques météorologiques et de températures intérieures (Tint) à partir d'une unité de surveillance et de commande (401) et envoyer des périodes MARCHE/ARRÊT d'un système HVAC (ON OFF MV) et un point de consigne de température (Tsp) à ladite unité de surveillance et de commande (401) ;
des deuxièmes moyens de connexion conçus pour récupérer des données de prévisions météorologiques à partir d'une unité de prévisions météorologiques ;
des moyens logiques (200) configurés pour segmenter les données historiques selon une pluralité d'états sémantiques indépendants de l'heure du jour, dans lequel les moyens logiques (200) comprennent en outre :
un premier module (210) configuré pour entraîner un premier ensemble de modèles de régression (Reg1) avec les données historiques segmentées ; et pour calculer les périodes MARCHE/ARRÊT d'un système HVAC (ON_OFF_MV) selon au moins le premier ensemble de modèles de régression (Reg1) et les données de prévisions météorologiques ;
le système étant **caractérisé en ce que**
le calcul des périodes MARCHE/ARRÊT du système HVAC (ON_OFF_MV) comprend la simulation d'une température intérieure (Tint) avec une première heure de début et, si la température intérieure (Tint) n'atteint pas la limite de température de confort minimale (Tspₘᵢₙ) pendant une occupation du bâtiment, la simulation, de manière itérative, d'une température intérieure (Tint) avec une seconde heure de début, dans lequel la seconde heure de début est antérieure à la première heure de début d'une différence égale à la résolution temporelle (Δt), et ainsi de suite jusqu'à ce que l'horizon temporel (tₘₐₓ) soit atteint ou qu'une limite de température de confort minimale soit satisfaite,
le système comprenant en outre :
un second module (220) configuré pour entraîner un second ensemble de modèles de régression (Reg2) avec les données historiques segmentées ; et pour calculer une matrice de points de consigne de température (Tsp(t)) selon un algorithme méta-heuristique qui utilise ledit second ensemble de modèles de régression (Reg2) sur la base de simulations de consommation d'énergie pour différentes valeurs de point de consigne de température E(Tsp(t)) et des périodes MARCHE/ARRÊT du système HVAC (ON OFF MV) calculées.

11. Système selon la revendication 10, dans lequel lesdits moyens logiques (200) sont situés dans le même bâtiment que l'unité de surveillance et de commande (401).

12. Système selon la revendication 10, dans lequel lesdits moyens logiques (200) sont situés dans un serveur distant (411) connecté au bâtiment par le biais d'un réseau de communication (410).

13. Système selon l'une quelconque des revendications 10 à 12, comprenant en outre des troisièmes moyens de connexion conçus pour récupérer des informations de tarification associées à la consommation d'énergie (Ee, Eg) à partir d'un dispositif de comptage intelligent (406).

14. Système selon l'une quelconque des revendications 10 à 13, comprenant en outre des quatrièmes moyens de connexion conçus pour récupérer des informations provenant de capteurs internes (407) et de capteurs externes (408) du bâtiment.

15. Programme d'ordinateur comprenant des moyens de code de programme d'ordinateur adaptés pour réaliser les étapes de la méthode selon l'une quelconque des revendications 1 à 9 lorsque ledit programme est exécuté sur un ordinateur, un processeur de signal numérique, une matrice prédiffusée programmable par l'utilisateur, un circuit intégré spécifique à une application, un microprocesseur, un microcontrôleur ou une quelconque autre forme de matériel programmable.
